(19) Europäisches Patentamt
European Patent Office
Office européen des brevets

(11) Publication number: **0 502 694 B1**

# EUROPEAN PATENT SPECIFICATION

(45) Date of publication of patent specification: **25.01.95**  (51) Int. Cl.6: **B60C 19/00**

(21) Application number: **92301811.3**

(22) Date of filing: **03.03.92**

(54) **A combination of front and rear tires for racing kart.**

(30) Priority: **07.03.91 JP 65301/91**

(43) Date of publication of application:
**09.09.92 Bulletin 92/37**

(45) Publication of the grant of the patent:
**25.01.95 Bulletin 95/04**

(84) Designated Contracting States:
**DE FR GB IT**

(56) References cited:
**DE-A- 1 480 962**
**DE-A- 3 612 886**
**DE-A- 3 637 825**
**GB-A- 2 205 283**

(73) Proprietor: **BRIDGESTONE CORPORATION**
**10-1, Kyobashi 1-Chome**
**Chuo-Ku**
**Tokyo 104 (JP)**

(72) Inventor: **Kojima, Hiroshi**
**19-5, Higashitoyoda 4-Chome**
**Hino City,**
**Tokyo (JP)**
Inventor: **Mitake, Hideo**
**8-3-111, Midori-Cho 1-Chome**
**Tanashi City,**
**Tokyo (JP)**

(74) Representative: **Whalley, Kevin et al**
**MARKS & CLERK,**
**57-60 Lincoln's Inn Fields**
**London WC2A 3LS (GB)**

# Description

This invention relates to a combination of front and rear pneumatic tires for racing karts, and more particularly to a tire structure in such a combination which can improve not only wear resistance but also steering property together with improved traction and braking performances.

Up to the present, bias tires are always used as pneumatic tires for racing karts though radial tires having improved properties are widely used for various vehicles.

The racing kart is a super-light and high-speed running vehicle. That is, the vehicle weight of the kart is extremely light as compared with that of a passenger car, and a differential mechanism is not arranged in a driving shaft of the kart. Therefore, it is required to absorb a difference of revolution number between tires located inward and outward from a turning direction during the cornering of the kart by slipping of the tire. If the general structure of a radial tire for a passenger car having a belt is applied to a kart as it is, the rigidity at the ground contacting portion is too high owing to the presence of the belt and hence the ground contacting property of the tire is lowered to degrade the steering stability. Furthermore, since a suspension device is not fundamentally arranged in the kart in addition to the differential mechanism, a machine setting is very difficult when a radial tire having a steering performance significantly different from that of a bias tire is applied to the kart as it is.

On the contrary, tire deformation in the cornering of a bias tire is not generally smooth as compared with that of the radial tire. Particularly, since the bias tire for the kart is poor in respect of the tire deformation and hence the ground contacting property in the cornering at high speed, the steering performances are degraded in the cornering, so that the cornering speed in the bias tire is limited to a certain value. However, such a cornering limit speed of the bias tire is not satisfactory in recent racing karts because the engine power is increased and the technique of planning chassis is considerably improved.

Furthermore, the bias tire has fairly poor wear resistance as compared with the radial tire, which reduces the attraction inherent to kart racing as a relatively inexpensive motor sport.

The present invention aims to provide a combination of front and rear tires for racing karts having considerably improved cornering limit speed and wear resistance by selecting the shape and structure of the tire together with the material and properties of the tire constituting parts within a given range to attain the formation of radial structure of the tire.

In the racing kart, the wheel alignment can be adjusted in the front wheel, so that when a negative camber is applied to the front wheel, the ground contacting property of the front tire located outside in the cornering direction can be rendered into a sufficiently reasonable value under an action of lateral acceleration speed to the tire. Therefore, the formation of radial structure is relatively easy in the front tire. On the contrary, the adjustment of wheel alignment can not be conducted in the rear tire for the racing kart, so that it is very difficult to render the rear tire into the radial structure. Under such circumstances, according to the invention, the crown profile of tread in the rear tire having the radial structure is changed so as to sufficiently smoothen the change of ground contacting area in the cornering without the adjustment of wheel alignment to enhance the ground contacting property, whereby the rear tire is very effectively followed in the high-speed cornering of the kart.

According to the invention, there is provided a combination of front and rear tires for racing karts each comprising a tread, a carcass comprised of at least one organic fiber cord ply, and a belt comprised of two organic fiber cord layers, the cords of which layers being crossed with each other, and having an outer diameter of not more than 300mm and an aspect ratio of not more than 0.5, characterized in that cords of said carcass ply extend in a direction substantially perpendicular to an equatorial plane of the tire, and cords of each of said belt layers have a cord angle of 10°-30° with respect to the equatorial plane, and said tread is made from a tread rubber having a 300% modulus of 20-45 kgf/cm², and a crown coefficient defined by a ratio of difference between height of tread center and height of tread end measured from the center of the tire (hereinafter referred to as drop height at ground contact end) to ground contacting width of the tire is smaller in said front tire than in said rear tire.

In a preferred embodiment of the invention, aliphatic polyamide fiber cord or polyester fiber cord is used as said cord for the belt layer.

The invention will be further described with reference to the accompanying drawings, wherein:

Fig. 1 is a radial section view of the rear tire of a tire combination according to the invention;

Fig. 2 is a radial section view of the front tire of a tire combination according to the invention;

Figs. 3a and 3b are schematic views illustrating a ground contacting state of the front tire, respectively; and

Figs. 4a and 4b are schematic views illustrating a ground contacting state of the rear tire, respectively.

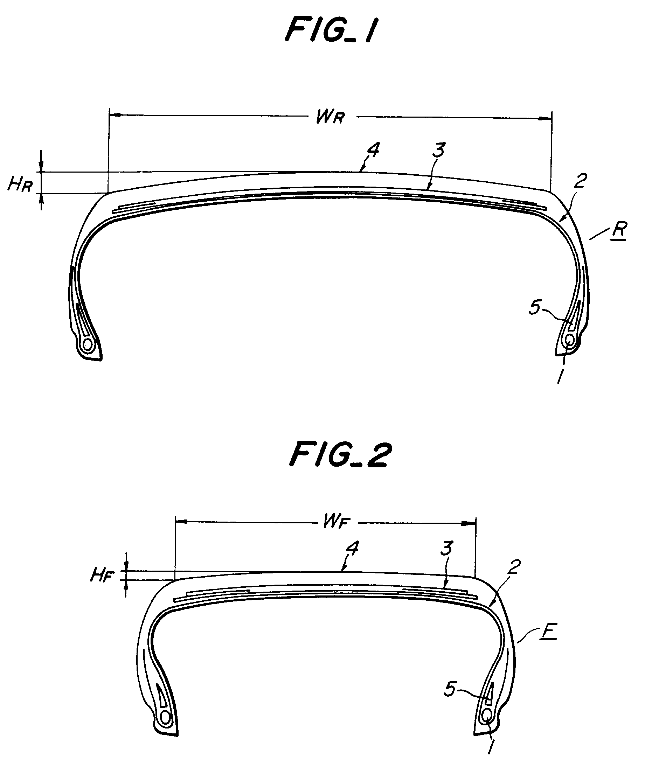

The crown shape of the tread in the tire combination according to the invention will be described with reference to Figs. 1 and 2. In the rear tire shown in Fig. 1, the crown coefficient or the ratio $H_R/W_R$ of drop height at ground contact end (difference between height of tread center and height of tread end measured from the center of the tire) $H_R$ to ground contacting width of tire $W_R$ is made larger than the crown coefficient of the front tire shown in Fig. 2 being the ratio $H_F/W_F$ of drop height at ground contact end $H_F$ to ground contacting width of tire $W_F$. Preferably, the ratio of crown coefficient of front tire to crown coefficient of rear tire is within a range of 0.47-0.75.

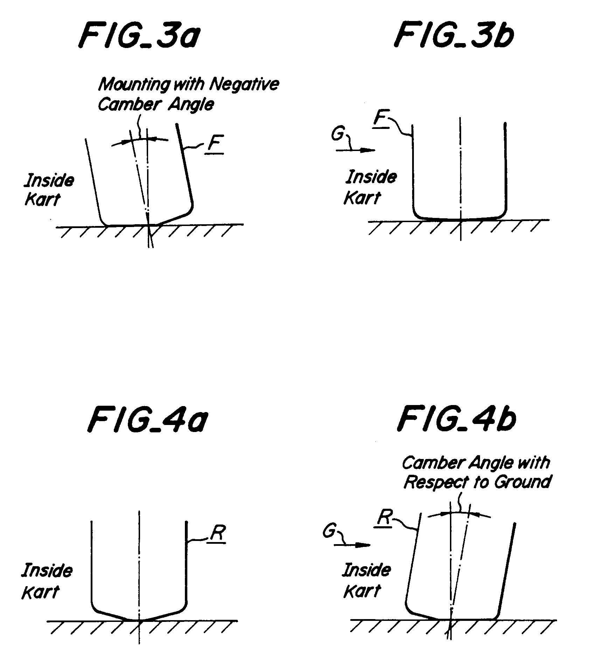

According to the invention, the crown shape of the tread in the front and rear tires is specified as mentioned above, so that when the racing kart is turned at high speed, if the tires located outside in the cornering are subjected to a large lateral acceleration speed accompanied with high-speed cornering, the front tire F mounted with a negative camber angle as shown in Fig. 3a is rendered into a substantially vertical state by the action of lateral acceleration speed G as shown in Fig. 3b and sufficiently uniformly contacted with the ground over substantially the whole of the tread width. On the other hand, the rear tire R contacted with ground at substantially vertical state as shown in Fig. 4a smoothly changes its ground contacting position at a small crown radius through the action of the lateral acceleration speed G as shown in Fig. 4b. Therefore, even when these front and rear tires have a radial structure having a high belt rigidity, the ground contacting property can be sufficiently maintained to enhance the road gripping property, and consequently the steering stability can be improved and the cornering limit speed can largely be increased.

Furthermore, according to the invention, the outer diameter of the tire is not more than 300mm and the aspect ratio is not more than 0.5, so that an adequate side rigidity can be given to the tire at a rim size defined for homologation (5 and 6 inches), whereby maximum performances can be developed.

In other words, when the outer diameter exceeds 300mm, the tire weight becomes heavier and the loading to engine undesirably increases. On the other hand, when the aspect ratio exceeds 0.5, the side rigidity is weakened to increase the rolling quantity of the kart and hence degrade the ground contacting property of the tire.

Moreover, organic fiber cords are used as the cord for the carcass ply, so that the rigidity against the road surface becomes lower as compared with the case of using steel cords and hence a large ground contacting area and a proper ground contact pressure are obtained.

Also, these organic fiber cords extend in a direction substantially perpendicular to the equatorial plane of the tire, for example at a cord angle of 90°-75° with respect to the equatorial plane, so that the wear resistance and other properties inherent to a conventional radial tire can be sufficiently developed.

In the tire according to the invention, the belt layer is also made from organic fiber cords and the cords in the belt layer have a cord angle of 10°-30°, preferably 20°-30°, with respect to the equatorial plane, whereby improved ground contacting property can be obtained.

When the cord angle of the belt layer is less than 10°, the rigidity of the belt is too high and the ground contacting property lowers, while when the cord angle exceeds 30°, the hoop effect of the belt is degraded.

According to the invention, the tread rubber has a 300% modulus of 20-45 kgf/cm$^2$, preferably 20-35 kgf/cm$^2$ (according to JIS K6301 using a test piece of Dumb-bell shape pattern No. 3), whereby a proper gripping force against the road surface can be obtained as a tire for a racing kart.

When the 300% modulus is less than 20 kgf/cm$^2$, the wear resistance is degraded, while when it exceeds 45 kgf/cm$^2$, the required gripping force as a tire for a racing kart can not be obtained.

In Fig. 1 is shown an embodiment of the rear tire R of a tire combination according to the invention, and an embodiment of the front tire F of a tire combination according to the invention is shown in Fig. 2. In Figs. 1 and 2, numeral 1 is a bead core, and numeral 2 a carcass ply wound around the bead core 1 from the inside toward the outside.

Numeral 3 is a belt superimposed about a crown portion of the carcass 2, and numeral 4 a tread disposed on the outer surface of the belt 3 and continuously connecting at both sides to sidewall portions.

In the illustrated embodiment, the carcass 2 is comprised of two carcass plies each containing nylon fiber cords of 840d/2, the cords of which plies are extended at a cord angle of 84° with respect to the equatorial plane of the tire. Furthermore, the belt 3 is comprised of two belt layers each containing polyester fiber cords of 1000d/2 arranged at a cord angle of 25° with respect to the equatorial plane, the cords of which layers being crossed with each other.

In these tires of the illustrated embodiment, the tread 4 is made from a tread rubber having a 300% modulus of 32 kgf/cm$^2$.

Numeral 5 is a bead apex arranged outside the bead core 1 and between the carcass ply and its turnup portion in the carcass 2.

According to the invention, the crown coefficient of the rear tire R defined as a ratio $H_R/W_R$ of drop height at ground contact end $H_R$ to ground contacting width of tire $W_R$ is made larger than the crown coefficient of the front tire F as previously mentioned. Preferably, the ratio of crown coefficient of the front tire to crown coefficient of the rear tire is within a range of 0.47-0.75, whereby the gripping force of the rear tire against the road surface is sufficiently enhanced in the cornering of the kart.

When the ratio of crown coefficient of the front tire to crown coefficient of the rear tire is less than 0.47, if the crown radius of the front tire is too large, the surface pressure of the outer shoulder portion of the tire becomes higher in the cornering and lowering of gripping force is indexed from uneven wearing, while if the crown radius of the rear tire is too small, the ground contacting property of the rear tire is degraded due to the buckling or the like and hence the ground contact balance between the front tire and the rear tire is poor and good cornering performance is not obtained. On the other hand, when the ratio exceeds 0.75, as the crown radius of the front tire becomes too small, the ground contacting area of the front tire becomes small and hence the under-steering tendency becomes stronger as compared with the rear tire, while as the crown radius of the rear tire becomes too large, the ground contacting property of the tire is poor and slipping of the tire may suddenly occur.

According to the combination of the front and rear tires for racing karts of the above structure, the adaptability to the kart can largely be improved to effectively remove the difficulty of machine setting, and also the function inherent to the radial tire can be sufficiently developed to improve the wear resistance and to largely increase the cornering limit speed.

The steering performance, wear resistance and traction and braking performances were evaluated with respect to a combination of front and rear invention tires (hereinafter invention combination) and a combination of front and rear comparative tires (hereinafter referred to as comparative combination) below.

The size and other dimensions of the tires to be tested are shown in Table 1.

Table 1

| | | Size | Rim applied | Ground contacting width W (mm) | Drop height H (mm) | Crown coefficient H/W | Carcass | Belt | Cord angle of carcass ply | Cord angle of belt layer | 300% modulus of tread rubber |
|---|---|---|---|---|---|---|---|---|---|---|---|
| Combination of front and rear comparative tires | front tire | 4.5/10.5-6 | 4.5 × 6 | 106 | 3.0 | 0.0283 | two plies each containing nylon cords of 840 d/2 | two layers each containing PET cords of 1000 d/2 | 84° | 25° | 32 |
| | rear tire | 7.0/11.5-6 | 8.0 × 6 | 168 | 4.7 | 0.0279 | | | | | |
| Combination of front and rear invention tires | front tire | 4.5/10.5-6 | 4.5 × 6 | 106 | 2.5 | 0.0236 | | | | | |
| | rear tire | 7.0/11.5-6 | 8.0 × 6 | 168 | 7.0 | 0.0417 | | | | | |

When a racing kart provided with these tires (chassis: BIREL, engine: PARILIA100cc) was run on Sugao circuit course in Japan, the lap time in the kart provided with the invention combination was faster by about 0.62 second as a best time and by about 0.45 second as an average time than those of the kart provided with the comparative combination. Furthermore, the steering performance, traction and braking performances in the former kart were all considerably superior to those of the latter kart through feeling evaluation. Moreover, the wear resistance of the tire in the former kart was higher by about 30% than that of the latter kart.

When a racing kart provided with these tires (chassis: Yamaha, engine: Yamaha 100 cc) was run on Haruna circuit course in Japan, the lap time in the kart provided with the invention combination was faster by about 0.31 second as a best time and by about 0.23 second as an average time than those of the kart provided with the comparative combination. Furthermore, the steering performance, traction and braking performances in the former kart were all considerably superior to those of the latter kart through feeling evaluation. Moreover, the wear resistance of the tire in the former kart was higher by about 23% than that of the latter kart.

When a racing kart provided with these tires (chassis: TONYKART, engine: ROTAX 100 cc) is run on JESOLO circuit course in Italy, the lap time in the kart provided with the invention combination was faster by about 0.62 second as a best time and by about 0.77 second as an average time than those of the kart provided with the comparative combination. Furthermore, the steering performance, traction and braking performances in the former kart were all considerably superior to those of the latter kart through feeling evaluation and the slipping of the rear tire was smoothened to improve the control of the kart during cornering. Moreover, the wear resistance of the tire in the former kart was higher by about 23% than that of the latter kart.

As mentioned above, according to the invention, the adaptability of the radial tire to the racing kart can considerably be enhanced, and also the wear resistance and cornering limit speed can be improved while maintaining the properties inherent to the radial tire.

## Claims

1. A combination of front and rear tires (F,R) for racing karts each comprising a tread (4), a carcass (2) comprised of at least one organic fiber cord ply, and a belt (3) comprised of two organic fiber cord layers, the cords of which layers being crossed with each other, and having an outer diameter of not more than 300mm and an aspect ratio of not more than 0.5, characterized in that cords of said carcass ply extend in a direction substantially perpendicular to an equatorial plane of the tire, and cords of each of said belt layers have a cord angle of 10°-30° with respect to the equatorial plane, and said tread is made from a tread rubber having a 300% modulus of 20-45 kgf/cm$^2$, and a crown coefficient defined by a ratio of difference between height of tread center and height of tread end measured from the center of the tire to ground contacting width of the tire is smaller in said front tire than in said rear tire.

2. A tire combination as claimed in Claim 1, characterized in that said cord of the belt layer is polyamide fiber cord or polyester fiber cord.

3. A tire combination as claimed in Claim 1 or 2, characterized in that the ratio of said crown coefficient of the front tire to said crown coefficient of the rear tire is within a range of 0.47-0.75.

4. A tire combination as claimed in any of Claims 1 to 3, characterized in that said cords of the carcass ply extend at a cord angle of 90°-75° with respect to the tire equatorial plane.

5. A tire combination as claimed in any of Claims 1 to 4, characterized in that said cord of the belt layer has a cord angle of 20°-30° with respect to the tire equatorial plane.

6. A tire combination as claimed in any of Claims 1 to 5, characterized in that said tread is made from a tread rubber having a 300% modulus of 20-35 kgf/cm$^2$.

## Patentansprüche

1. Kombination von vorderen und hinteren Reifen (F,H) für Renn-Go-Karts, wobei jeder Reifen aufweist: eine Lauffläche (4), eine Karkasse (2), die aus mindestens einer Lage mit Cordfäden aus einer organischen Faser besteht, und einem Gürtel (3), der aus zwei Schichten mit Cordfäden aus einer organischen Faser besteht, wobei die Cordfäden dieser Schichten sich überkreuzen, und jeder Reifen einen äußeren Durchmesser von nicht mehr als 300 mm und ein Querschnittsverhältnis von nicht mehr als 0,5 hat, dadurch gekennzeichnet, daß sich die Cordfäden der Karkassenlage in einer Richtung erstrecken, die im wesentlichen senkrecht zu der Äquatorebene des Reifens ist, und die Cordfäden von jeder der Gürtelschichten einen Cordfadenwinkel von 10°-30° bezüglich der Äquatorebene haben, und die Lauffläche aus einem Laufflächengummi besteht, der einen 300%-Elastizitätsmodul von 20-45 kp/cm$^2$ hat, und ein Kronenkoeffizient, der durch Verhältnis der Differenz zwischen der Höhe der Lauffläche-Mitte und der Höhe des Laufflächen-Randes von der Reifenmitte zu der Bodenberührungsbreite des Reifens definiert ist, bei dem vorderen Reifen kleiner als bei dem hinteren Reifen ist.

2.  Reifenkombination gemäß Anspruch 1, dadurch gekennzeichnet, daß der Cordfaden der Gürtelschicht ein Polyamidfaser-Cordfaden oder ein Polyesterfaser-Cordfaden ist.

3.  Reifenkombination gemäß Anspruch 1 oder 2, dadurch gekennzeichnet, daß das Verhältnis des Kronenkoeffizienten des vorderen Reifens zu dem Kronenkoeffizienten des hinteren Reifens innerhalb eines Bereichs von 0,47-0,75 liegt.

4.  Reifenkombination gemäß irgendeinem der Ansprüche 1 bis 3, dadurch gekennzeichnet, daß die Cordfäden der Karkassenlage sich unter einem Cordfadenwinkel von 90°-75° bezüglich der Äquatorebene des Reifens erstrecken.

5.  Reifenkombination gemäß irgendeinem der Ansprüche 1 bis 4, dadurch gekennzeichnet, daß der Cordfaden der Gürtelschicht einen Cordfadenwinkel von 20°-30° bezüglich der Äquatorebene des Reifens hat.

6.  Reifenkombination gemäß irgendeinem der Ansprüche 1 bis 5, dadurch gekennzeichnet, daß die Lauffläche aus einem Laufflächengummi besteht, der einen 300%-Elastizitätsmodul von 20-35 kp/cm$^2$ hat.

**Revendications**

1.  Combinaison de bandages pneumatiques avant et arrière (F, R) pour des karts de course, comprenant chacun une bande de roulement (4), une carcasse (2) comprenant au moins une nappe de câblés en fibres organiques, et une ceinture (3) comprenant deux couches de câblés en fibres organiques, les câblés desdites couches se croisant mutuellement, et possédant un diamètre externe qui n'est pas supérieur à 300 mm et un rapport nominal d'aspect qui n'est pas supérieur à 0,5, caractérisée en ce que les câblés de ladite nappe de carcasse s'étendent dans une direction essentiellement perpendiculaire au plan équatorial du bandage pneumatique, et les câblés de chacune desdites couches de ceinture forment un angle de câblé de 10°-30° par rapport au plan équatorial, ladite bande de roulement étant réalisée à partir d'un caoutchouc de bande de roulement possédant un module à 300% de 20-45 kg/cm$^2$, le coefficient de couronne défini par le rapport de la différence entre la hauteur au centre de la bande de roulement et la hauteur à l'extrémité de la bande de roulement mesurées à partir du centre du bandage pneumatique à la largeur du bandage pneumatique qui vient se mettre en contact avec le sol, dans ledit bandage pneumatique avant, est inférieur au coefficient de couronne dans ledit bandage pneumatique arrière.

2.  Combinaison de bandages pneumatiques selon la revendication 1, caractérisée en ce que lesdits câblés de la couche de ceinture sont des câblés en fibres de polyamide ou des câblés en fibres de polyester.

3.  Combinaison de bandages pneumatiques selon la revendication 1 ou 2, caractérisée en ce que le rapport dudit coefficient de couronne du bandage pneumatique avant audit coefficient de couronne du bandage pneumatique arrière se situe dans le domaine de 0,47-0,75.

4.  Combinaison de bandages pneumatiques selon l'une quelconque des revendications 1 à 3, caractérisée en ce que lesdits câblés de la nappe de carcasse s'étendent en formant un angle de câblé de 90°-75° par rapport au plan équatorial du bandage pneumatique.

5.  Combinaison de bandages pneumatiques selon l'une quelconque des revendications 1 à 4, caractérisée en ce que lesdits câblés de la couche de ceinture forment un angle de câblé de 20°-30° par rapport au plan équatorial du bandage pneumatique.

6.  Combinaison de bandages pneumatiques selon l'une quelconque des revendications 1 à 5, caractérisée en ce que ladite bande de roulement est réalisée à partir d'un caoutchouc de bande de roulement possédant un module à 300% de 20-35 kg/cm$^2$.

## FIG_1

## FIG_2

# FIG_3a

Mounting with Negative
Camber Angle

_F_

Inside
Kart

# FIG_3b

G

_F_

Inside
Kart

# FIG_4a

_R_

Inside
Kart

# FIG_4b

Camber Angle with
Respect to Ground

G

_R_

Inside
Kart